# EUROPEAN PATENT APPLICATION

(11) **EP 2 886 922 A1**
(43) Date of publication of application: **24.06.2015**
(21) Application number: 14198301.5
(22) Date of filing: 16.12.2014
(51) Int. Cl.: F16L 25/00, F16L 47/06

(54) **Pipe joint incorporating an insert**

(30) Priority: 19.12.2013 GB 201322613
(71) Applicant: Polypipe Limited, Doncaster, Yorkshire DN12 1ES (GB)
(72) Inventor: Ramella, Stuart, Leicestershire LE11 1LE (GB); Ness, Chris, Nottingham NG5 4GW (GB)
(74) Representative: Oxley, Robin John George

(57) **Abstract**

According to a first embodiment of the present invention there is provided a joint for a pipe fitting, including a spigot and socket, comprising a first pipe end 5 in the form of a socket 10, a second pipe end in the form of a spigot 12 and an insert 14 configured to extend between a tapered section of the pipe and a free end of the spigot to provide a substantially continuous internal surface of the pipe. Also provided is such a pipe fitting. A pipe socket forming mould is also provided comprising a first cylinder and a second cylinder which are concentric, a radially extending and axially facing shoulder between the cylinders, wherein the first cylinder has at least a section with a larger diameter than that of the second cylinder. A method for inserting an insert into a pipe system is also provided, comprising affixing an insert to a socket forming mould, inserting the mould into a pipe to form the socket, removing the mould from the pipe while retaining the insert in the pipe, between a tapered section of the pipe and a location for the free end of a spigot, due to the socket material extending radially less than the radially outer edge of the insert gripping the insert.

## Description

### Field of the Invention

This invention relates to a pipe joint. Particularly, the invention relates to a joint comprising an insert for a gap between a socket and a spigot in a pipe joint system. The invention also relates individually to a spigot and to a socket for such a joint system, each comprising an insert.

### Background to the Invention

For piping systems, it is important that a good connection is made between sections of pipe to minimise leakage into or out of the pipe. To this end, and in many cases, a socket and spigot joint is used. In plastic pipe systems, and in particular those using PVC, the sockets can be formed by heating the end of the PVC pipe until it is soft and then pushing a plug into the open end before cooling. This produces an increase in diameter of the PVC pipe and results in the end of the pipe taking the form of the plug that has been profiled in the shape of a socket that accepts a straight length of a connecting structured wall pipe/duct, e.g. a corrugated pipe. This plug is then removed which produces a socket arrangement which, together with a corresponding complementarily shaped spigot, provides a connection between pipes/ducts.

This method of producing the sockets requires shallow draft angles to form the profile of the socket. This results in a gap caused by the difference in the outer diameters of the structured wall pipe/duct and the single wall PVC pipe, the socket manufacturing technique and the structured wall design/construction. The larger the difference between the diameter of the two pipes, the larger the gap will be. This gap occurs where the PVC pipe expands from the pipe diameter to the socket diameter and the end of the structured wall pipe/duct cannot be pushed into the socket any further. This gap between the structured wall pipe/duct and the single wall PVC pipe can cause damage to cables when they are drawn through the pipe/duct after the piping system has been installed. The cables, as they are being pulled through the system, may drag on the edge of the structured wall pipe/duct, which could cut their outer shroud leaving the internal components of the cables exposed. Materials or debris that may be flowing through the pipework may also be caught within this gap which could lead to a blockage of the pipework.

The present invention has therefore been devised with the foregoing in mind. The invention seeks to overcome or ameliorate at least one of the disadvantages of the prior art, or provide a useful alternative.

### Summary of the Invention

According to a first aspect of the present invention there is provided a joint for a pipe system comprising a pipe comprising a socket, a corresponding spigot, an insert configured to extend between a tapered section of the pipe and a free end of the spigot to provide a substantially continuous internal surface of the pipe. The addition of the insert alleviates the problem of having a gap between the structured wall pipe/duct and the single wall PVC pipe. Unlike in the case of a single wall pipe to single wall pipe joint, the end of the structured wall pipe/duct, i.e. the end of the spigot, cannot be chamfered to overcome the gap issue, due to the thin wall, twin wall construction of the structured wall pipe/duct.

The insert may be substantially annular, and frustoconical, and may have a radially inner surface and a radially outer surface, the inner and outer surfaces being connected to each other. This shape completely fills the gap.

The insert inner surface may have a constant first inner diameter along its length and the insert outer surface may have at least a section which extends along, and matches, the internal surface of a tapered section of the pipe. This shape gives strength to the insert and keeps it in position.

The pipe inner surface may have at least a section with a diameter substantially the same as the first inner diameter. The spigot inner surface may have a diameter substantially the same as the first inner diameter. This gives the substantially continuous internal surface of the pipe.

The radially outer edge of the insert may extend radially further than the socket inner diameter. This allows the socket to grip the insert.

The socket may have a region of reduced internal diameter between the insert and the open end of the socket. This allows the socket to grip the insert.

The insert may create a seal between the tapered section of the pipe and the free end of the spigot. This stops any fluid/material escaping from the pipe.

Snap clips may be provided for holding the spigot against the insert to produce the seal. This improves the quality of the seal.

The insert inner and outer surfaces may be connected to each other around the whole circumference of the insert. The insert inner and outer surfaces may be connected to each other at an insert thin end. The insert may have a space between the inner and outer surfaces around a substantial part of the circumference of the insert. The insert inner and outer surfaces may be connected by connecting members located between the surfaces. The connecting members may be spaced equidistantly around the circumference of the insert. This gives a strong shape and minimises material used.

According to a second aspect of the present invention there is provided a pipe fitting comprising a pipe having a first inner diameter, a socket having a larger inner diameter, a tapered pipe section extending between the pipe and the socket, an annular insert having an inner surface with an inner diameter substantially the same as the first inner diameter, a tapered surface abutting the tapered pipe section, and a radially extending surface for abutting a free end of a spigot when inserted into the pipe fitting.

The radially outer edge of the insert may extend radially further than the socket inner diameter.

The socket may have a region of reduced internal diameter between the insert and the open end of the socket.

According to a third aspect of the present invention there is provided a pipe fitting comprising a spigot having a first inner diameter; an annular insert having an inner surface with an inner diameter substantially the same as the first inner diameter, wherein a radially extending surface of the insert abuts the free end of the spigot and the insert has a tapered surface for abutting a tapered pipe section.

The radially outer edge of the insert may extend radially further than the spigot outer diameter.

According to a fourth aspect of the present invention there is provided a pipe socket forming mould comprising a first cylinder and a second cylinder which are concentric, a radially extending and axially facing shoulder between the cylinders, wherein the first cylinder has at least a section with a larger diameter than that of the second cylinder. This allows the formation of the socket into the shape required.

The mould may comprise an annular notch in the external diameter of the mould where the shoulder connects to the first cylinder. This allows contraction of the pipe as it cools which enables the socket to grip the insert as the mould is removed from the pipe.

The mould may comprise an annular insert with a surface abutting the shoulder, a surface abutting the external surface of the second cylinder and a tapered surface extending from the diameter of the second cylinder to the diameter of the first cylinder. This is used when forming the socket when the insert is not inserted with the mould.

The mould may comprise an annular insert with a surface abutting the shoulder, a surface abutting the external surface of the second cylinder and a tapered surface extending from the diameter of the second cylinder and to a diameter larger than the first cylinder. This is used to form the protrusion of the pipe and subsequent contraction to the socket outer diameter which enables the socket to grip the insert as the mould is removed from the pipe.

According to a fifth aspect of the present invention there is provided a kit of parts for a pipe system comprising a pipe comprising a socket, a corresponding spigot, an insert configured to extend between a tapered section of the pipe and a free end of the spigot to provide a substantially continuous internal surface of the pipe.

According to a sixth aspect of the present invention there is provided a method for inserting an insert into a pipe system comprising affixing an insert to a socket forming mould, inserting the mould into a pipe to form the socket, and removing the mould from the pipe while retaining the insert in the pipe, between a tapered section of the pipe and a location for the free end of a spigot, due to the socket material extending radially less than the radially outer edge of the insert gripping the insert. The insert can be placed in the correct position at the same time as creating the socket.

According to a seventh aspect of the present invention there is provided a method for inserting an insert into a pipe system comprising affixing an insert on a spigot, and inserting the spigot into a socket formed from a pipe until the insert abuts a tapered section of the pipe. A good fit between the insert and the spigot can be made before they enter the pipe and the spigot can be used to correctly position the insert.

According to an eighth aspect of the present invention there is provided a method for inserting an insert into a pipe system comprising inserting a insert loose into a socket formed from a pipe until the insert abuts a tapered section of the pipe, and inserting a spigot into the socket until the free end of the spigot abuts a radially extending surface of the insert. This gives flexibility to position the insert and making sure it is in its correct position with respect to the pipe before entering the spigot into the pipe.

### Brief Description of the invention

Embodiments of the invention will now be described, by way of example only, with reference to the accompanying drawings in which:
Figure 1 shows a cross sectional view of the socket and the insert in place in accordance with an embodiment of the present invention;
Figure 2 shows a close up cross sectional view of the embodiment of Figure 1 with the insert in place in the socket, and also with the spigot connected;
Figure 3 shows a rear view of the insert in accordance with an embodiment of the present invention;
Figure 4 shows a front view of the insert in accordance with an embodiment of the present invention;
Figure 5 shows a view of the insert and the plug separated in accordance with an embodiment of the present invention.
Figure 6 shows a view of the insert and the plug with the insert radially outer edge extending beyond the diameter of the plug in accordance with an embodiment of the present invention.
Figure 7 shows a cross sectional view of the assembled plug, insert and pipe with socket formed in accordance with an embodiment of the present invention.
Figure 8 shows a view of the plug with an annular notch in the plug external diameter in accordance with an embodiment of the present invention.
Figure 9 shows a view of the plug with an integral tapered section in accordance with an embodiment of the present invention.
Figure 10 shows a cross sectional view of the socket, formed without a protrusion or contraction, and the insert in place in accordance with an embodiment of the present invention.
Figure 11 shows a cross sectional view of the socket, the spigot and the insert with sealing surfaces in accordance with an embodiment of the present invention.
Figure 12 shows a cross sectional view of the socket having snap clips, the spigot and the insert with sealing surfaces in accordance with an embodiment of the present invention.

### Description of the embodiments of the invention

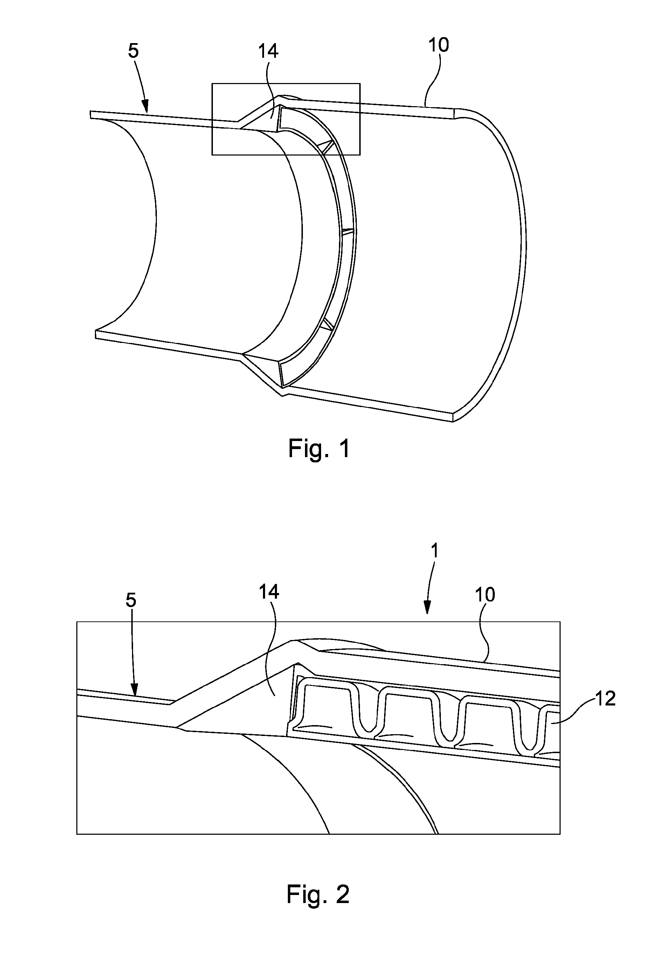

With reference to Figure 1 and Figure 2, there is provided a spigot and socket system 1 according to a first embodiment of the present invention. The spigot and socket system 1 comprises a first pipe end 5 in the form of a socket 10, a second pipe end in the form of a spigot 12 and an insert 14.

The first pipe end 5 is a substantially cylindrical tube and has a section, with a first inner diameter, which extends along its longitudinal length to a region where the diameter of the first pipe end 5 steadily increases to a second inner diameter. The first pipe end 5 continues with a shorter section which decreases in diameter to a third inner diameter. The pipe end 5 then has another section, with the third inner diameter, which forms the socket 10 and which extends further along its longitudinal length to terminate at an open end. The socket 10 is formed at the end of a PVC pipe in the present embodiment but could be any type of pipe with a socket arrangement into which an insert could fit. The spigot 12 is a substantially cylindrical tube which has an inner diameter which is substantially the same as the first inner diameter. It also has an outer diameter which matches to the third inner diameter of the socket 10, so the spigot 12 fits neatly into the socket 10. The spigot 12 is fitted in the socket 10 so that its front end lines up with the point where the first pipe end 5 begins to taper from the second inner diameter to the first inner diameter. In the present embodiment, the spigot 12 is a double walled structured straight length pipe but it may be any type of pipe or ducting that fits with the socket 10.

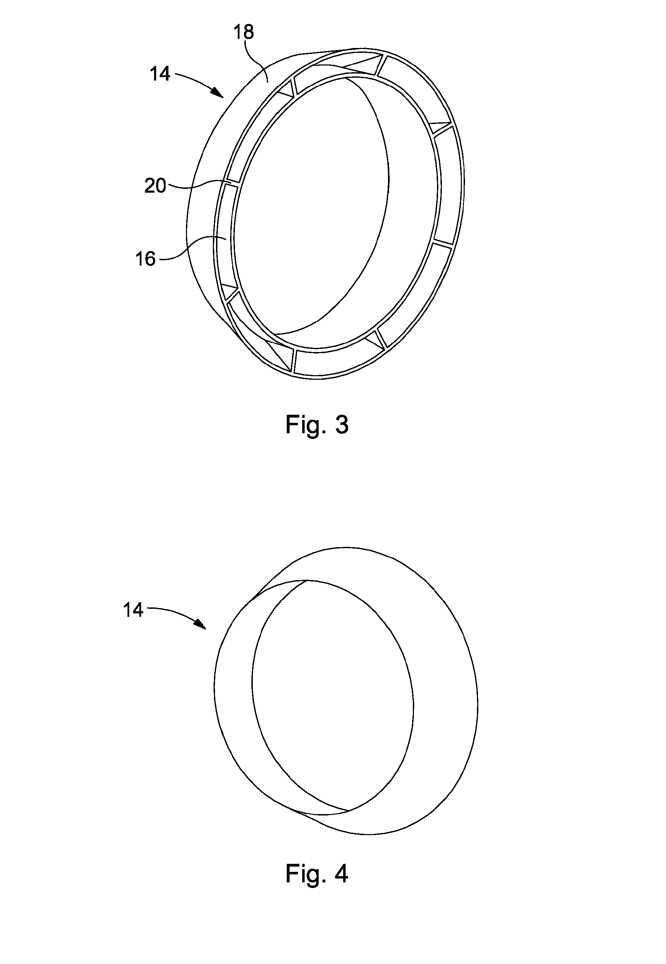

With reference to Figure 3 and Figure 4, the insert 14 is substantially annular and frustoconical, and has a radially inner surface 16 and a radially outer surface 18. The inner surface 16 has a constant inner diameter, substantially equal to the first diameter, along its length whilst the outer surface 18 tapers from a maximum outside diameter, equal to the second inner diameter, at a rear end of the insert 14, to the first inner diameter at a front end of the insert 14. The two surfaces give the insert a wedge shape in cross-section between them. This taper closely matches the taper of the pipe 5 when the socket 10 is formed. The inner and outer surfaces 16, 18 are connected to each other around the whole circumference of the insert 14 at the front end of the insert 14 at the first inner diameter. There is a space between the inner and outer surfaces 16, 18 of the insert 14 around a substantial part of the circumference of the insert 14, which is therefore hollow. In an alternative embodiment, the insert could be solid. The inner and outer surfaces 16, 18 are also connected by connecting members 20 positioned between the surfaces 16, 18 and spaced equidistantly around the circumference of the insert 14. These connecting members 20 add rigidity and strength to the insert 14. The preceding shape and size of the insert 14 described is not the only possible option and other dimensions and arrangements of the insert 14 that would give rise to the solution of the present invention are possible.

Referring once more to Figure 1, the insert 14 is positioned in the gap where the free end of the spigot 12 meets with the tapered section of the pipe 5. In a situation where the insert 14 is not in place, the spigot 12 would not be able to fill the gap between the free end of the spigot 12 and the tapered section of the pipe 5 due to the straight edge of the spigot 12 not matching the angle of the pipe 5 taper section. This gap may cause problems such as the edge of the spigot 12 cutting the outside of cables as they are being pulled through the pipes or items being caught in the gap leading to blockages. Even if the straight free end of the spigot 12 were given a tapered edge to match the pipe 5 taper, it would not alleviate the possible issue of cutting the outside of cables as the spigot 12 may not be fully in the correct position and would also have a sharp edge that would mean the damage to the cables would be even more severe. The insert 14 is conveniently formed from Polypropylene and formed by injection moulding. In other embodiments the insert 14 could be made from other materials such as PVC, polyethylene, ABS, acetyl, aluminium, steel, rubber and silicone rubber and formed by other methods such as casting, extrusion, rotational moulding, turning and CNC.

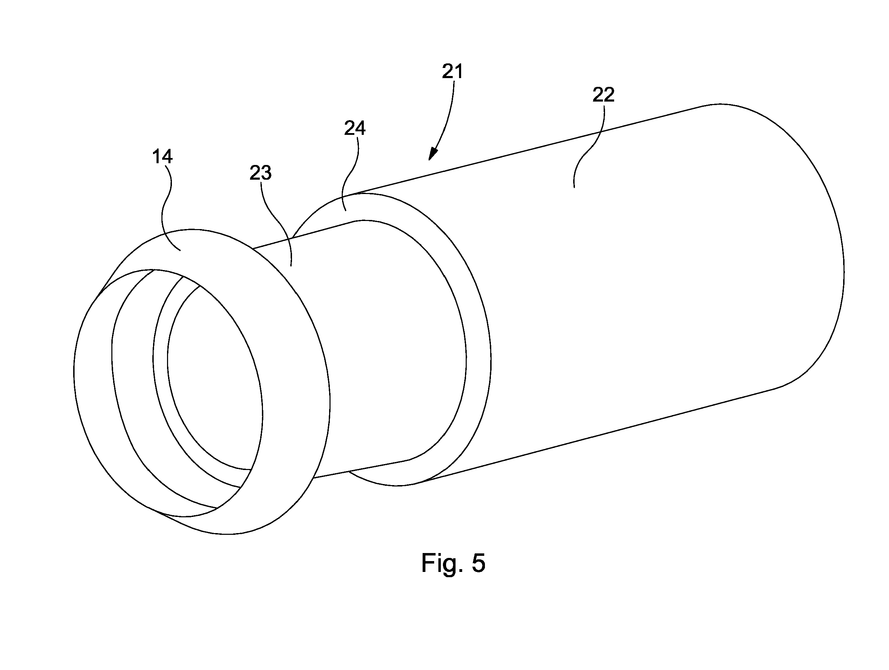

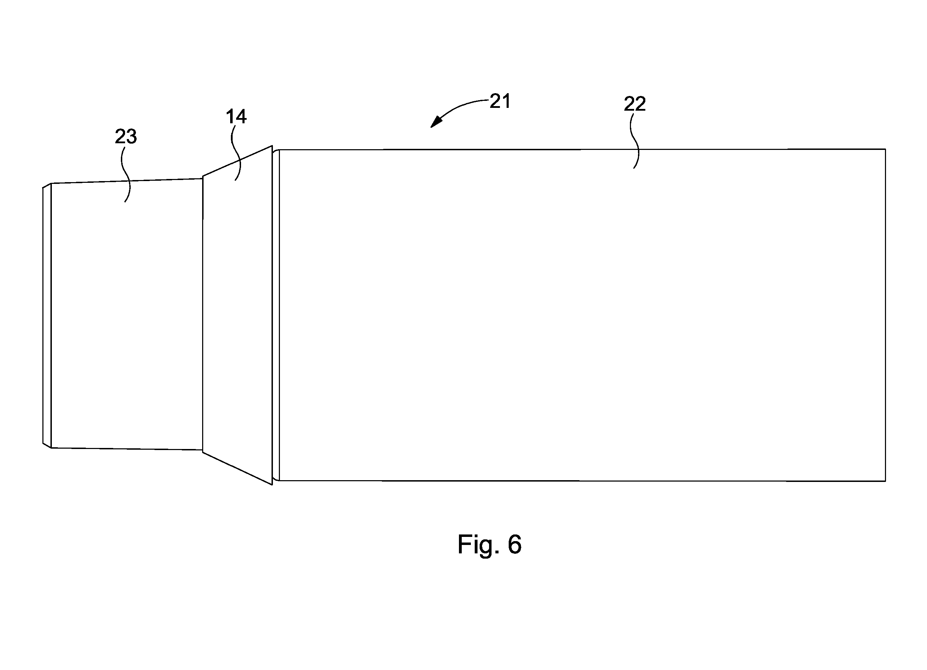

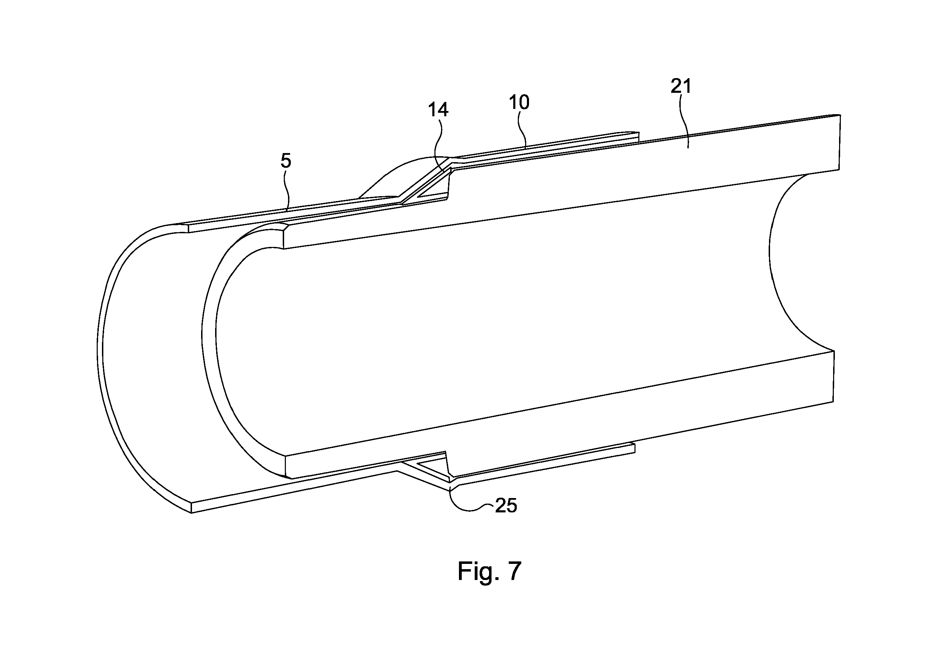

Next, methods of forming the joint will be described. In an embodiment and shown in Figure 5, a plug 21 is formed as two concentric cylinders 22, 23 with a radially extending (axially facing) shoulder 24 between them. The insert 14 is separate to the plug 21 and can be attached to the plug 21. As shown in Figure 6, the insert 14 is affixed to the plug 21 and forms a tapered section of the plug 21. The radially outer edge of the insert 14 extends radially further than the larger cylinder 22 of the plug 21, by a distance of I. As shown in Figure 7, the socket 10 is formed by heating the open end of the PVC pipe 5 until it is soft and then inserting the plug 21 into the open end of the pipe 5 before cooling. The plug 21 is formed in the shape of a socket 10 that accepts a straight length of pipe which results in the end of the PVC pipe 5 taking this shape and therefore forming the socket 10. The plug 21 is then removed and this process forms a socket 10 and spigot 12 arrangement to provide a connection between the PVC pipe and the straight length of pipe. The socket 10 may also be formed by softening the material and blowing the pipe into a mould.

The plug 21 has a larger diameter than the pipe 5, and the tapered end allows introduction of the plug 21 into the pipe 5. As the plug 21 is inserted, the tapered portion expands the pipe 5 radially, and a cylindrical portion holds the radial expansion of the pipe 5. The external diameter of the cylindrical portion of the plug 21 corresponds to the desired internal diameter of the socket 10, allowing for any contraction of the material on cooling.

The radial protrusion of the insert 14 beyond the cylinder 22 of the plug 21 means that in a protrusion section 25 the pipe diameter extends radially further than the formed socket 10 diameter. This means that, adjacent to the protrusion section 25, the pipe radially contracts to the diameter of the large cylinder 22 of the plug 21, forming a socket 10 having a diameter less than the radially outer edge of the insert 14, and this allows the pipe material to grip and retain the insert when the plug 21 is removed from the pipe 5.

Because the insert 14 formed the tapered portion of the plug 21 during formation of the socket 10, the inside of the pipe 5 tapered portion conforms to the insert's 14 tapered surface and substantially no gap is formed between the inside of the unexpanded portion of the pipe 5 and the thin end of the insert 14.

The spigot 10 (being of substantially the same external diameter as the large cylinder 22 of the plug 21) can then be fed into the socket 10, and abut the radially extending surface of the insert 14 (the thick end of the wedge shape) which abutted the shoulder 24 of the plug 21 during formation of the socket 10. Thus, the interior surface of the joint is substantially continuous and, where the internal surfaces of the two pipes forming the joint are of substantially the same diameter, the interior diameter of the joint is substantially constant throughout.

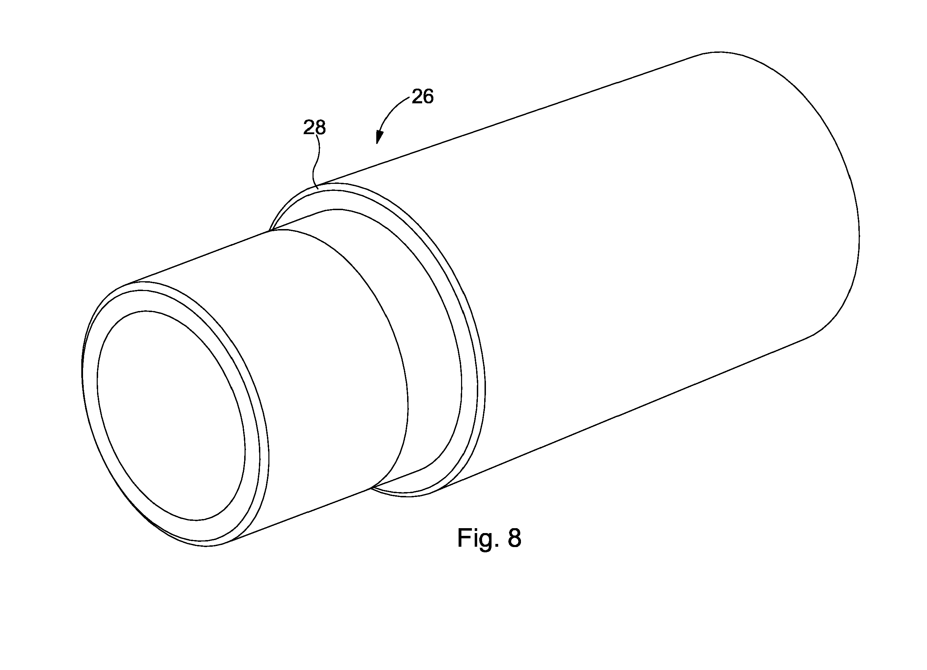

In an alternative embodiment, and shown in Figure 8, an annular recess or notch 28 is provided in the external diameter of a plug 26 where the insert abuts the shoulder 24 of the plug 26. In this case, the radially outer edge of the insert does not need to extend radially further than the larger cylinder 22 of the plug 26. When the heated pipe end 5 is pushed over the plug 26 with the insert mounted thereon, it travels over the notch 28. When the plug 26 is in place, the pipe end 5 material relaxes and contracts radially slightly into the notch 28. When the plug 26 is removed from the newly formed socket 10, this radial contraction, together with the tapered surface of the pipe 5, grip and retain the insert. The spigot 12 (e.g. the structured wall pipe), when inserted into the socket 10, can have substantially the same outer diameter as the internal diameter of the newly formed socket 10 and abut the radially extending surface of the insert due to the contraction of the pipe, formed from the notch 28, fitting within the corrugated section of the structured wall pipe nearest the free end of the structured wall pipe.

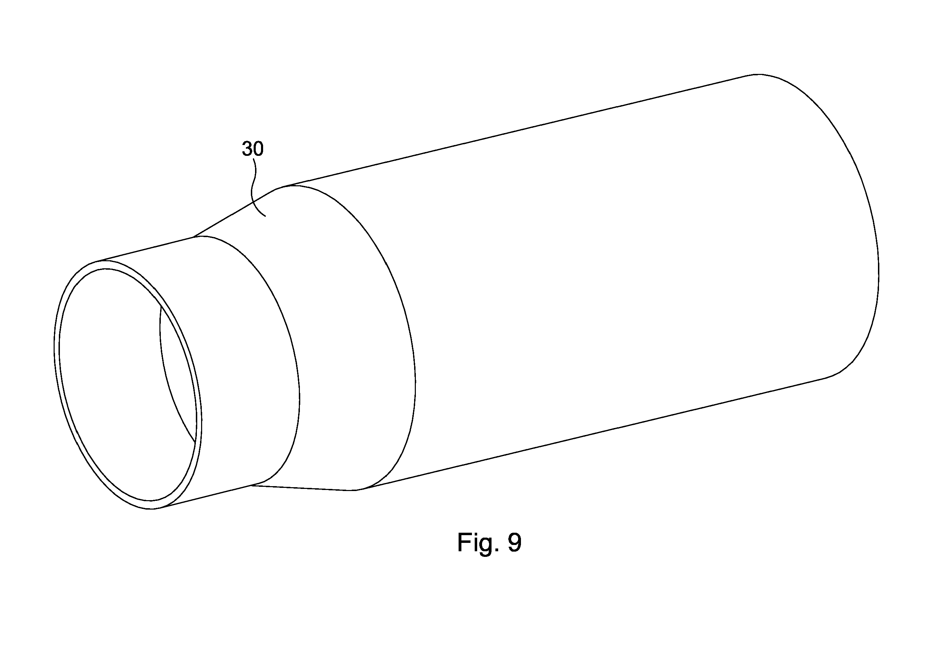

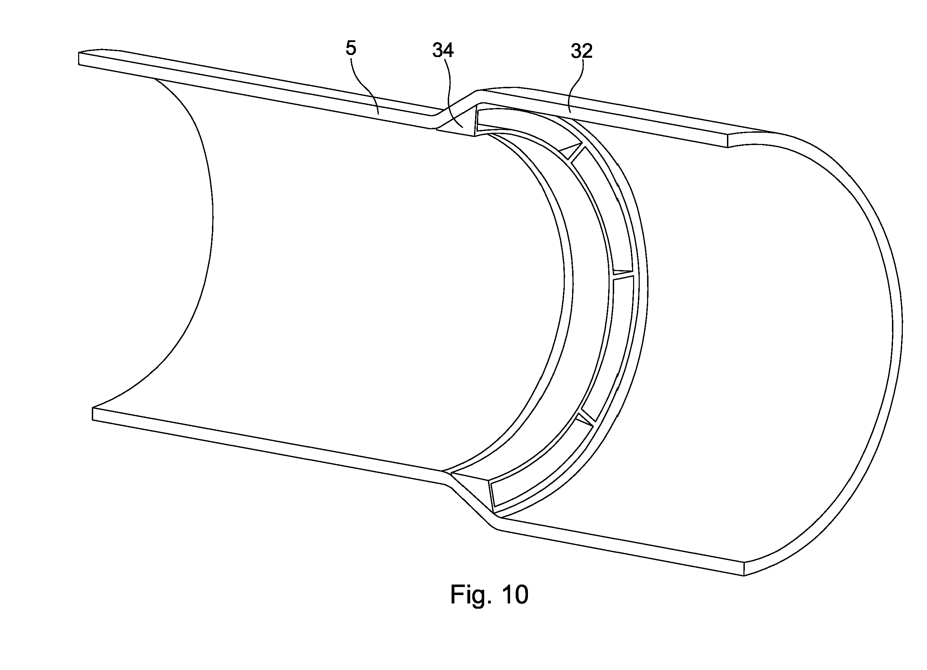

In an alternative embodiment the radially outer edge of the insert 14 extends radially further than the larger cylinder 22 of the plug 26 and the plug 26 has a notch 28 provided. In this case, the combination of the contraction of the pipe 5 due to the protrusion and the contraction into the notch 28 together enables the pipe material to grip and retain the insert 14 when the plug 26 is removed from the pipe 5. In a further alternative embodiment and shown in Figure 9, the tapered section of the plug 30 is retained on, and may be integral with, the plug 30. The pipe 5 is thus formed with a corresponding taper. However, in this embodiment, as the insert is not retained inside the pipe 5, no notch or radial protrusion is required and a smooth transition from the increasing taper to the large cylindrical surface is provided. Instead, the insert 34 is left loose as shown in Figure 10, and inserted into the socket 32 ahead of the spigot 12. Rather than inserting the insert 34 loose, the insert 34 may be mounted on the spigot 12 at the free end, for example by spin welding, before being inserted into the socket 32, to abut against the corresponding tapered surface of the pipe 5 and produce a substantially continuous inner surface. Again, the insert 34 is dimensioned so that it is retained between the tapered section of the pipe 5 and spigot 12 at the free end of the spigot 12.

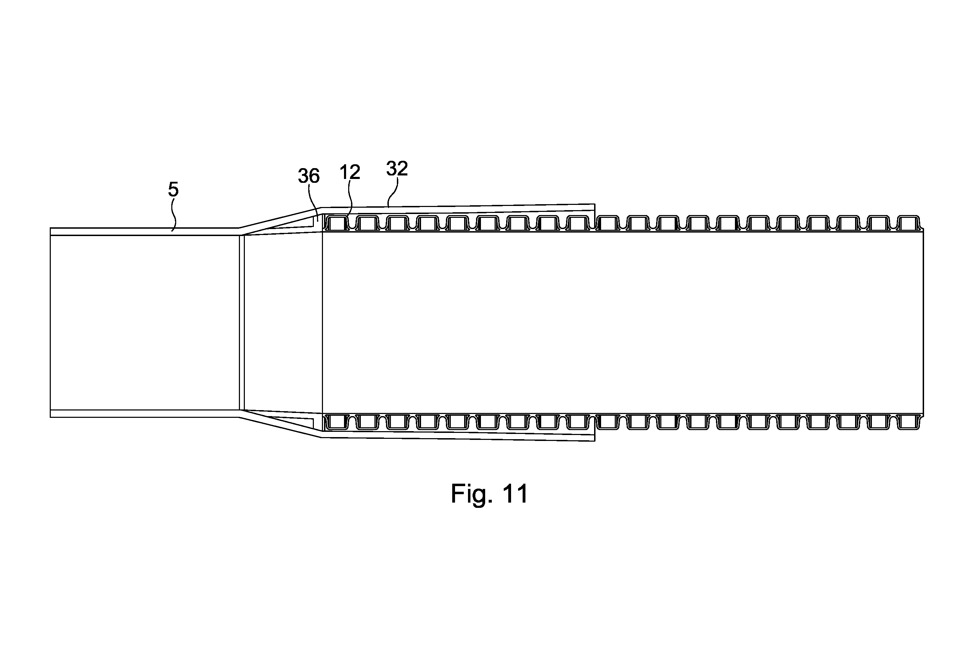

In a further embodiment, as shown in Figure 11, the insert 36 does not have an outer surface around its whole circumference. The insert 36 only has an outer surface at sections spaced around the circumference i.e. where the insert connecting members 20 of previous embodiments are located. Also, the tapered outer surface does not extend fully from the inner diameter to the outer diameter of the insert 36. There is a recess around the circumference of the insert 36. The insert 36 is made of rubber so seals the tapered section of the pipe 5 to the insert 36 tapered section(s) and seals the rear end surface of the insert 36 to the spigot 12. Alternatively, in another embodiment, the insert has a sealing surface on the rear end surface of the insert, which seals the spigot 12 to the insert. The insert has a sealing surface on the tapered surface of the insert which seals the pipe 5 to the insert.

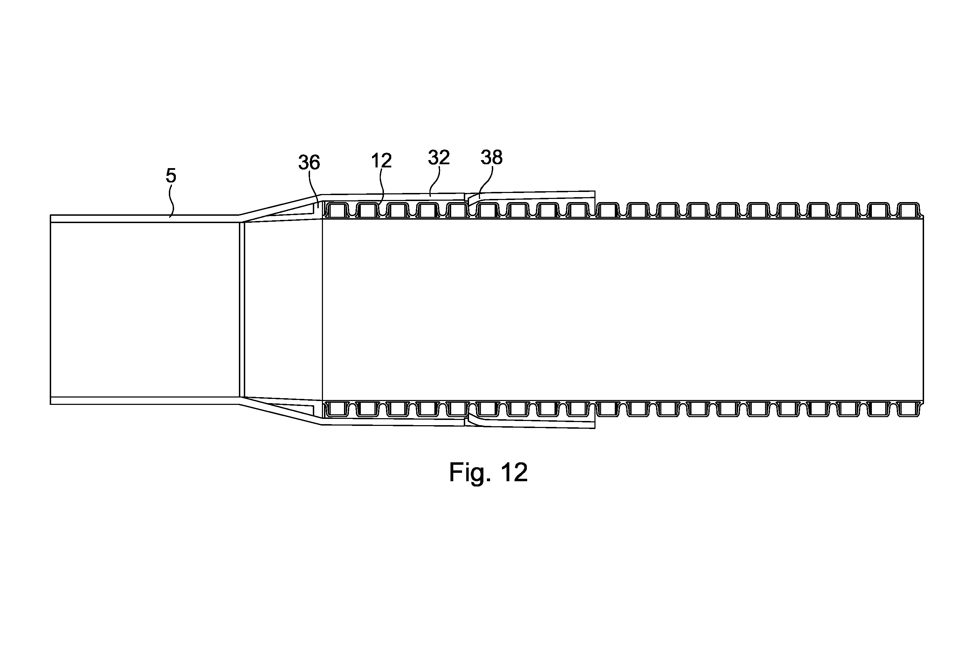

In a further embodiment, as shown in Figure 12, snap clips 38 are formed in the socket 32 which hold the spigot 12 against the sealing surface in order to make a seal. Once the socket 32 has been formed the snap clips 38 are created by a tool punching through part of the wall of the socket 32 from the outside of the socket 32 so a section of the socket 32 protrudes radially inwardly from the inside surface of the socket 32. The corrugated pipe (the spigot) 12 can then be freely inserted into the socket 32 with the snap clip 38 entering the gaps in the corrugated pipe 12 to hold the corrugated pipe 12 in the socket 32. There may be one or more snap clips 38 provided. Other forms of clips or methods may be used to hold the pipe 12 in the socket 32 and against the seal.

It will be appreciated by persons skilled in the art that various modifications may be made to the above embodiment without departing from the scope of the present invention as defined by the claims. For example, whilst the above discussion has been concerned with PVC pipes, the invention is equally applicable to many types, sizes and materials of pipes for many applications such as water drainage, sewerage, power, general purpose, lighting, motorway communications etc.

## Claims

**1.** A joint for a pipe system comprising:
a pipe comprising a socket;
a corresponding spigot;
an insert configured to extend between a tapered section of the pipe and a free end of the spigot to provide a substantially continuous internal surface of the pipe.

**2.** A joint for a pipe system according to claim 1, wherein the insert is substantially annular, and frusto-conical, and has a radially inner surface and a radially outer surface, the inner and outer surfaces being connected to each other.

**3.** A joint for a pipe system according to claim 2, wherein the insert inner surface has a constant first inner diameter along its length and the insert outer surface has at least a section which extends along, and matches, the internal surface of a tapered section of the pipe, and wherein the pipe inner surface has at least a section with a diameter substantially the same as the first inner diameter and the spigot inner surface has a diameter substantially the same as the first inner diameter.

**5.** A joint for a pipe system according to any preceding claim, wherein the insert creates a seal between the tapered section of the pipe and the free end of the spigot and wherein snap clips are provided for holding the spigot against the insert to produce the seal.

**6.** A joint for a pipe system according to any one of claims 2 to 5, wherein the insert inner and outer surfaces are connected to each other around the whole circumference of the insert.

**7.** A joint for a pipe system according to any one of claims 2 to 6, wherein the insert inner and outer surfaces are connected to each other at an insert thin end.

**8.** A joint for a pipe system according to any one of claims 2 to 7, wherein the insert has a space between the inner and outer surfaces around a substantial part of the circumference of the insert.

**9.** A joint for a pipe system according to any one of claims 2 to 8, wherein the insert inner and outer surfaces are connected by connecting members located between the surfaces.

**10.** A joint for a pipe system according to claim 9, wherein the connecting members are spaced equidistantly around the circumference of the insert.

**11.** A pipe fitting comprising:
a pipe having a first inner diameter;
a socket having a larger inner diameter;
a tapered pipe section extending between the pipe and the socket;
an annular insert having an inner surface with an inner diameter substantially the same as the first inner diameter, a tapered surface abutting the tapered pipe section, and a radially extending surface for abutting a free end of a spigot when inserted into the pipe fitting.

**12.** A joint for a pipe according to any one of claims 1 to 10 or a pipe fitting according to claim 11, wherein the radially outer edge of the insert extends radially further than the socket inner diameter, and wherein the socket has a region of reduced internal diameter between the insert and the open end of the socket.

**13.** A pipe socket forming mould comprising:
a first cylinder and a second cylinder which are concentric;
a radially extending and axially facing shoulder between the cylinders;
wherein the first cylinder has at least a section with a larger diameter than that of the second cylinder.

**14.** A pipe socket forming mould according to claim 13, comprising:
an annular notch in the external diameter of the mould where the shoulder connects to the first cylinder.

**15.** A socket forming mould according to claim 13 or 14, further comprising:
an annular insert with a surface abutting the shoulder, a surface abutting the external surface of the second cylinder and a tapered surface extending from the diameter of the second cylinder to the same diameter of the first cylinder or to a diameter larger than that of the first cylinder.

**16.** A method for inserting an insert into a pipe system comprising:
affixing an insert to a socket forming mould;
inserting the mould into a pipe to form the socket;
removing the mould from the pipe while retaining the insert in the pipe, between a tapered section of the pipe and a location for the free end of a spigot, due to the socket material extending radially less than the radially outer edge of the insert gripping the insert.
